Europäisches Patentamt

European Patent Office  (11) Publication number: **0 012 627**

Office européen des brevets  **B1**

(19)

(12) **EUROPEAN PATENT SPECIFICATION**

(45) Date of publication of patent specification: **17.08.83**

(51) Int. Cl.³: **B 01 D 39/20, F 42 B 3/04 //B60R2 1/08**

(21) Application number: **79302928.1**

(22) Date of filing: **17.12.79**

(54) Gas inflator structures, cooling filters therefor and methods of making such filters.

(30) Priority: **18.12.78 US 970601**

(43) Date of publication of application: **25.06.80 Bulletin 80/13**

(45) Publication of the grant of the patent: **17.08.83 Bulletin 83/33**

(84) Designated Contracting States: **DE FR GB IT SE**

(56) References cited:
**DE - B - 2 518 460**
**FR - A - 1 127 842**
**US - A - 2 683 500**
**US - A - 3 469 297**
**US - A - 3 504 516**
**US - A - 3 759 708**
**US - A - 3 877 882**
**US - A - 3 985 076**
**US - A - 4 017 100**

(73) Proprietor: **THIOKOL CORPORATION P.O. Box 1000 Newtown Pennsylvania 18940 (US)**

(72) Inventor: **Schneiter, Fred E. 2868 N. 150 West North Ogden Utah 84404 (US)**

(74) Representative: **Warren, Francis Charles et al, Baron & Warren 18 South End Kensington London W8 5BU (GB)**

Courier Press, Leamington Spa, England.

# Gas inflator structures, cooling filters therefore and methods of making such filters

This invention relates to gas inflators or generators, and particularly to chemical or solid fuel gas generators that employ cooling filters and are useful for inflating safety cushions for automotive vehicle crash restraint systems.

Various forms of cooling filters for gas generators have been proposed in the prior art including filters made of wrapped screen wire or screen wire cut into a pattern and stacked. Typically, screen wire cooling filters, such as the filter disclosed in US—A— 3,985,076 that was granted October 12, 1976, have a depth in the direction of flow of the effluent from thirteen cm or less to several cm. While such cooling filters have worked satisfactorily, certain limiting conditions exist that are corrected or significantly improved by the present invention.

With reference to wrapped screen cooling filters as described in US—A— 3,985,076, the effluent flow generally is parallel to the screen surface or between alternate layers of screen. The maintenance of a constant and uniform porosity is extremely important for the achievement of uniform and reproducible gas generator or inflator operation. Any step or loose section in the wrapped or stacked screens allows the effluent to pass through the filter uninterrupted with the result that the effluent going to the safety cushion or crash bag is neither cooled, nor filtered. Thus, wrapped screen filters require extreme care in fabrication, require careful inspection and have a high rejection rate in production.

Cooling filters made with pattern cut and stacked screens generally overcome the problems associated with by-pass of the effluent resulting from flows within the filter. Such filters, however, are very expensive. Screen wire is relatively expensive and cutting the typical circular or doughnut pattern to make a stacked filter results in a significant waste of material.

The present invention seeks to overcome the aforementioned problems of the prior art cooling filters while providing, additionally, advantages of increased flexibility of inflator structural design, the use of lower cost materials, and ease of control of filter density and thereby control of inflator operating pressure.

An object of the invention is to provide a simplified structure for chemical or solid fuel gas inflators or generators having an improved cooling filter configuration that ensures intimate and uniform contact with the gas stream and in which the cooling filter can be made from wire of different materials with little or no waste of material.

The present invention consists in a gas inflator for an inflatable occupant restraint, comprising a housing, a gas generating charge in said housing, an electric squib for igniting said charge in response to a predetermined signal, an outlet in said housing for the expulsion of gases formed upon igniting and burning of said charge, and a cooling filter pack in said housing between said charge and said outlet, characterised in that said cooling filter pack is made of numerous randomly oriented pressed crimped wire segments.

The invention further provides a method of making a cooling filter pack for a gas inflator, characterised by the steps of crimping smooth wire into a squiggley pattern, cutting the crimped wire into a plurality of segments, loosely placing the randomly oriented crimped wire segments in a mold having the shape and form desired for the cooling filter pack, and pressing said wire segments together in the mold.

Inflators tested with the pressed wire filter according to the present invention have shown better reproducibility than comparable tests with inflators provided with a wrapped screen filter. A primary reason for the better reproducibility is believed to be better uniformity of the pressed wire filter pack with its more intricate gas paths which causes all of the effluent to make multiple contacts with the crimpled wire segments or elements of the filter, thus ensuring intimate and uniform contact of the filter with the effluent and providing cold surfaces for heat absorption and for the condensation of solids.

As applicable to chemical inflators the pressed wire filter of the present invention is characterised by its ability to control the operating pressure of the inflator by the manner in which the crimped wire segments are pressed. The inflator gas stream exit temperature, as is known in the art, is largely dependent upon the heat transfer surfaces that are available in the filter. These surfaces can be controlled by the weight and diameter of the wire used in the filter. Surprisingly, however, the density to which the crimped wire segments are pressed has no effect on the gas stream exit temperature as long as the distributon of the wire segments is uniform and sufficient porosity for flow is maintained. Tests conducted with filter bulk densities of from 25 to 50 percent of the theoretical solid metal density have produced a range of inflator operating pressure ranging from about 82.7 bars with a low density filter to 172.29 bars for a high density filter with no other changes to the inflator.

With the ability to control inflator operating pressure, the pressed wire filter of the present invention makes possible desirable simplification in inflator construction because the combustion chamber wall normally used for the controlling ballistic orifice can now be eliminated. Additionally, the ability to achieve satisfactory cooling and filtration in a reduced density filter enables a structural design for the inflator providing for lower pressure operation with lower weight and at reduced cost.

The invention will now be further described, by way of example, with reference to the accompanying drawings, in which:—

Figure 1 is a block diagram and Figures 2, 3, 9 and 10 are diagrammatic, cross-sectional illustrations of equipment that may be employed in practicing the method of the present invention;

Figure 4 illustrates a crimped wire segment of one embodiment of an improved filter according to the present invention;

Figure 5 is a sectional view through the center of a circulator inflator according to one embodiment of the present invention;

Figures 6 and 7 are curves illustrating for cooling filters of different weight combustion chamber and inflator outlet pressure variations during the inflator action time; and

Figure 8 is a sectional view through the center of another form of circular inflator embodying the present invention.

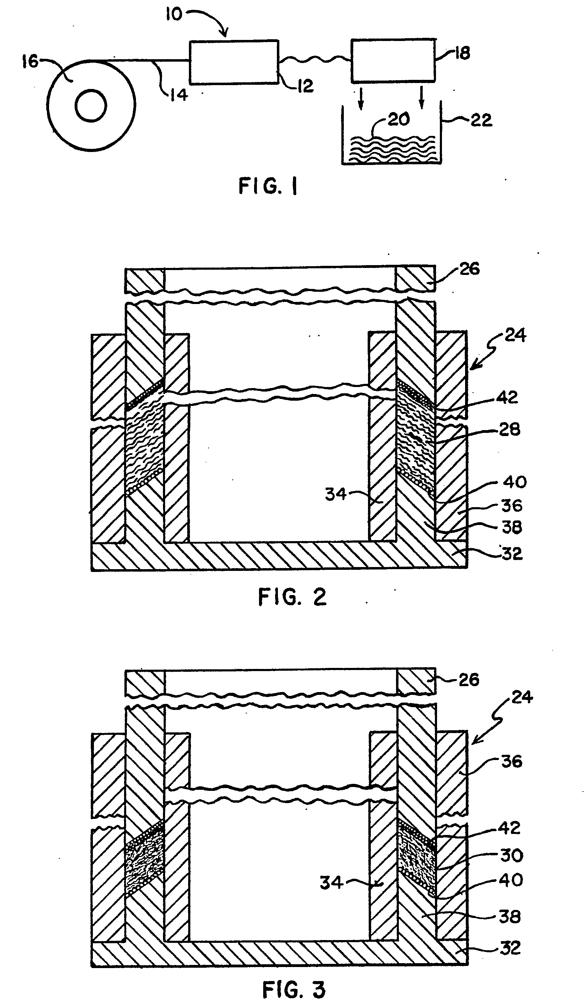

The equipment 10 illustrated in Figures 1, 2 and 3 for making the pressed wire fiber filter according to the present invention includes a machine 12 for crimping wire 14 as the wire 14 is drawn off a supply or roll of wire 16, a cutting machine 18 for cutting the crimped wire into short fibers or segments 20, a storage bin or container 22 for storing the crimped wire segments 20, a cylindrical container or mold 24 and a cooperating cylindrical ram 26, the size, shape and form of the mold 24 and the ram 26 being selected to provide the desired size, shape and form of the filter.

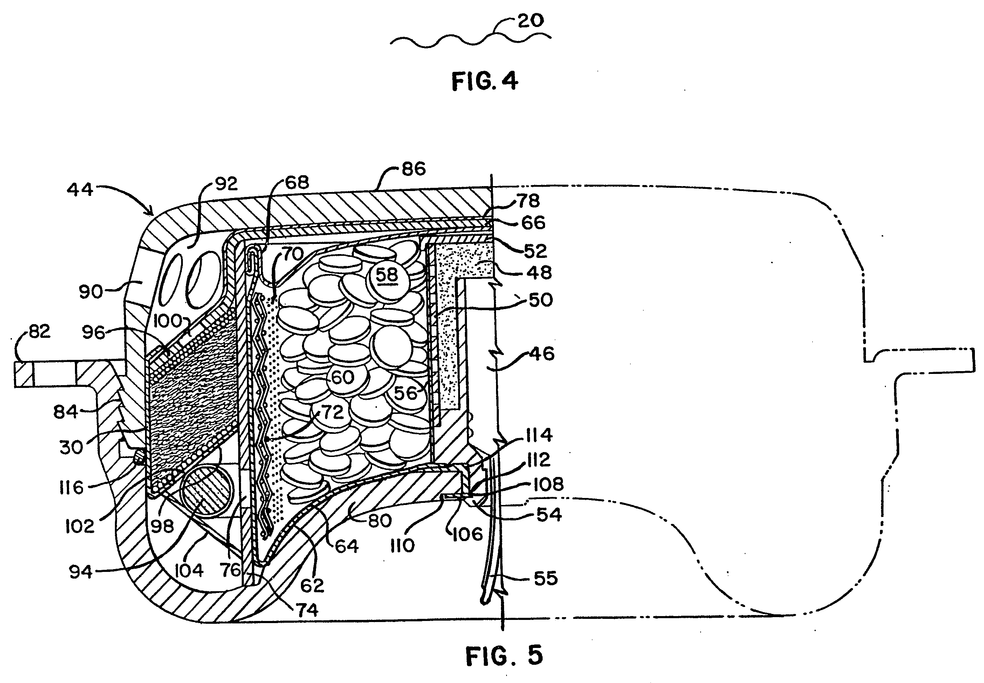

The crimping machine 12 may be of any known type and crimps the wire 14 into a wavy or squiggley pattern in one or more planes. The crimped wire 14, after being cut by cutting machine 18 into short fibers or segments 20, such as the segment illustrated in Figure 4, are loosely placed in random orientation in the mold 24, as indicated at 28 in Figure 2, where the segments 20 are pressed by the ram 26 into an annular filter pack 30 of the size, shape and form desired for the pressed wire fiber filter pack 30, the ram 26 exerting a pressing force of magnitude sufficient to move the ram and wire segments 20 into the position shown in Figure 3. The mold 24 and ram 26 illustrated in Figures 2 and 3 are arranged to provide a pressed wire filter pack 30 of annular form having skewed opposed parallel faces. In order to provide for ready separation of the filter pack 30 from the mold 24 when formed, the mold 24 desirably is separable, as indicated, and comprises, a circular base member 32 and inner and outer cylindrical members 34 and 36, respectively, an upwardly extending cylindrical projection 38 on the base member 32 serving as a guide for the proper positioning of the cylindrical members 34 and 36. Oblique opposed surfaces on the projection 38 and on ram 26 form the desired skewed opposed surfaces of filter pack 30.

The wires are crimped to provide interlocking when pressed into a filter, to cause random orientation of the wire segments, and to provide multiple small and intricate gas paths through the filter. One material that may be used for the wire 14 is bright carbon steel in diameters from 0.12 to 0.63 millimetres in diameter. It will be understood however, that depending upon the application, other materials may be used for the wire 14 such as aluminum, copper or stainless steel. The wire 14 may be crimped in various patterns, one such pattern being shown in Figure 4. Typically, the width of the crimped wire segment 20 may vary from 3 to 100 wire diameters. The length of the wire fibers or segments have no significant effect upon the end function of the filter. The fibers or segments must be reasonably short, however, to facilitate their handling and their distribution in the container or mold 24. If the wire segments are too long, they tend to hang together tenaciously and cannot be easily handled. In general, the wire fibers or segments may range in length from approximately 0.3 centimetres to 2.5 centimetres.

Since the individual wire fibers or segments 20 are loose during the filter assembly, and may also come loose after the filter pack 30 has been pressed, it is desirable to place a layer of woven screen over the pressed wire filter on both the gas inlet and exit sides. Such layers of woven screen are indicated in Figure 2 by reference numerals 40 and 42, respectively, the screen 40 typically comprising one layer of 12 mesh screen and the screen 42 two layers of 80 mesh screen. If desired, the layers of woven screen 40 and 42 may be associated with the filter pack 30 after pressing of the latter into the desired configuration has been effected.

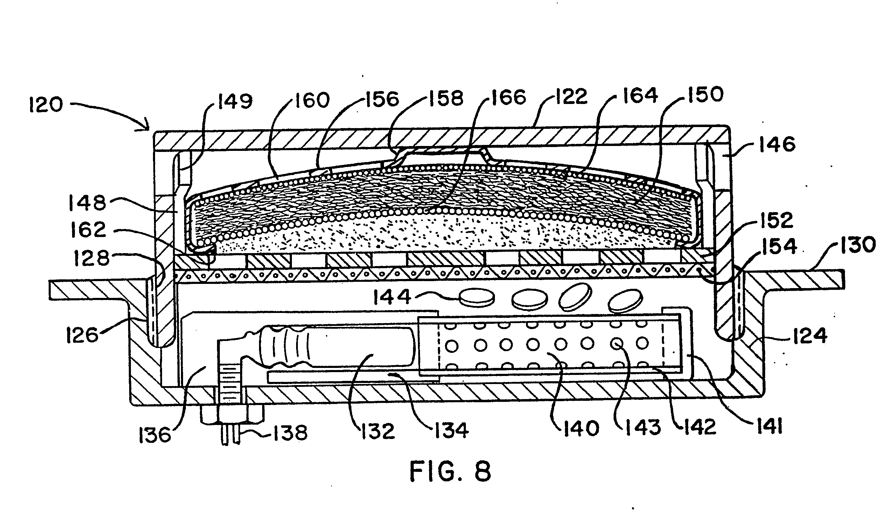

Typical applications of the pressed wire filter pack 30 constructed according to the foregoing method are illustrated in Figures 5 and 8. Specifically, Figure 5 shows such a pressed wire filter pack 30 substituted for the spirally wrapped wire screen cooling device of the generator disclosed in the aforementioned US—A— 3,985,076, the disclosure of which patent, by reference, is incorporated herein. Figure 8 shows a lighter weight, lower cost structural arrangement for a gas generator or inflator 44 that is designed for lower pressure operation.

The gas inflator 44 of Figure 5 includes a centrally located electric squib 46 that is surrounded by granular pyrotechnic material 48 in a perforated cylinder 50 having an end cap 52. The squib 46 is supported in a mounting adapter 54 through which electrical wires 55 extend for energizing the squib 46. A rupturable diaphragm 56 is disposed in surrounding relation to the cylinder 50. Diaphragm 56, in turn, is surrounded by pelletized gas generant material 58 which is surrounded by an annular filter 60. The diaphragm 56 serves the dual purpose of retaining the granular pyrotechnic material 48 in the perforated cylinder 50 and of ensuring that the gases produced by the pyrotechnic material 48 have sufficient pressure to permeate the gas generating charge 58 throughly for efficient ignition before they are released by rupture of the diaphragm 56.

The assemblage embraced by the annular filter 60 is enclosed within a hermetically sealed rupturable container 62. The container 62 is preferably made of aluminum and comprises a drawn, cup-shaped member 64 sealed to an end disc 66 with a double-crimp seal 68, typical of metal containers used for preserving food and beverages.

The annular filter 60 is preferably made in two parts, an inner part comprising a plurality of layers of fine screen 70 (about 30 to 60 mesh) surrounded by a plurality of layers of coarse screen 72 (about 8 to 16 mesh). The fine screen 70 filters solid particles out of the gases, and the coarse screen 72 creates a plenum chamber between the fine screen 70 and the wall of rupturable container 62 for build-up of gas pressure to rupture container 62 and to provide for a free-flow of gases therefrom.

Container 62 is enclosed in an inner housing formed by a cylinder 74 having a plurality of peripheral orifices 76 near one end, an end cap 78 that fits over the other end, and a concave half shell 80 of the outer housing. The concave half shell 80 has an annular mounting flange 82 and internal screw threads 84 for engagement with the convex half shell 86. Convex half shell 86 has external threads 88 and a plurality of peripheral orifices 90. An annular chamber 92 between the inner housing cylinder 74 and the outer housing half shells 80 and 86 contains a cooling filter pack 30 and optionally an adjusting material or substance 94 for neutralizing the acidity or the alkalinity of the gases. The cooling filter pack 30 is made as described by reference to Figures 1, 2 and 3 and is retained in position between the orifices 76 of the inner housing cylinder 74 and the orifices 90 of the outer housing convex half shell 86 by a flange 96 on the end cap 78 and an annular retaining member 98. The flange 96 and the annular retaining member 98 have perforations indicated at 100 and 102, respectively, to permit the flow of the generated gases through the filter pack 30. An annular supporting member 104 retains the pH adjusting material 94 in a position adjacent the orifices 76 in the inner housing cylinder 74.

The mounting adapter 54 for squib 46 is retained in the concave shell 80 by a snap ring 106 that fits in a groove 108 of the adapter 54 and into a recess 110 of the half shell 80. The wall of the concave half shell 80 is confined between the snap ring 106 and a shoulder 112 on the adapter 54 is also sealed relative to the half shell 80 by an elastomeric composition 114. An annular, elastomeric, O-ring seal 116 is provided at the juncture of the two half shells 80 and 86 and adjacent the retaining member 98 to prevent the escape of gases therethrough. Similarly, a bead 118 of a room temperature vulcanizing silicone rubber is provided at the juncture of the annular retaining member 98 and the inner housing cylinder 74 to prevent the escape of gases therethrough, that is, to minimize channeling of gases between the annular retaining member 98 and the inner housing cylinder 74.

The invention is illustrated by the following examples of operation of gas inflator 44 in which the gas generating charge 58 employed, in each case, consisted of 70% sodium azide ($NaN_2$), 28% molybdenum disulfide and 20% sulfur. The combustion chamber filter 60 comprised three layers 70 of 40 mesh wire screen and two layers 72 of 12 mesh wire screen.

The pressure in the inner cylinder 74, that is, the combustion chamber pressure, and the pressure of the effluent gases exiting the peripheral orifices 90 of the gas inflator 44 into an evacuated tank were measured, as was also the pH of the gas in the tank.

Example 1

75 grams and 25 grams of pellets all 6.35 mm in diameter and 1.52 mm and 3.04 mm thick, respectively, were used for the gas generant 58. The ignition system included an electric squib and 3 grams of a composition for the pyrotechnic material 48. The composition is an ignition powder consisting of 15% by weight boron and 85% potassium nitrate. The cooling filter 30 comprised 175 grams of crimped wire segments with 2—60 mesh wire screen layers 42 on top and 1—30 mesh wire screen layer 40 underneath. The material used for the neutralizer 94 comprised iron sulfate, $FeSO_4$.

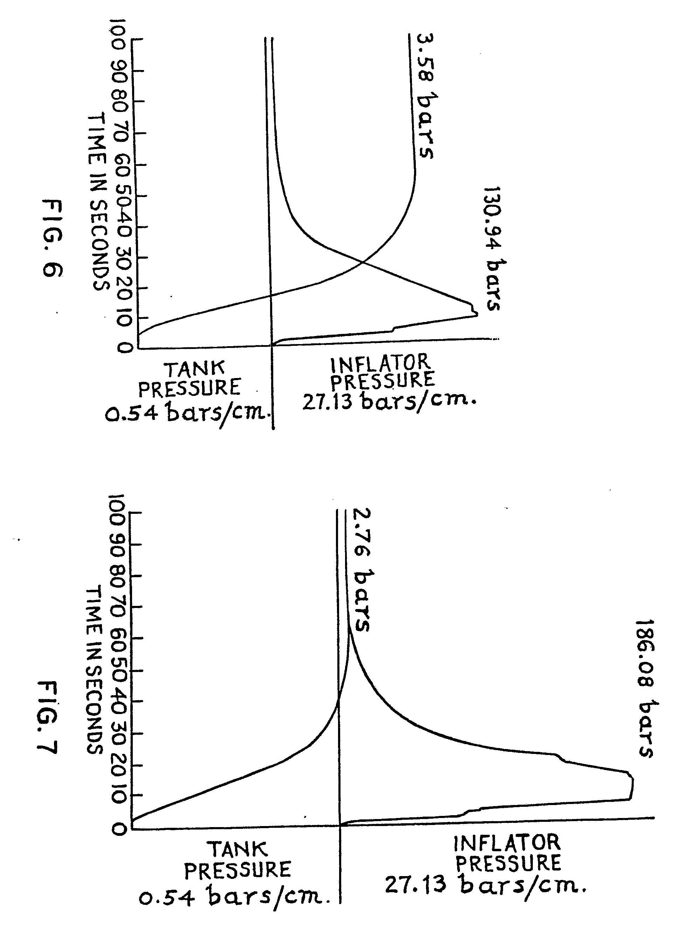

The results are plotted in Figure 6 wherein it is seen that the pressure in the combustion chamber increased to a maximum pressure of 130.94 bars in an interval of 8 milliseconds (msec) after an ignition delay of 2 msec, the generator action time being 40 msec. Action time is defined as the intervening time between 10% of the maximum on the rising portion of the pressure curve to 10% of the maximum on the falling portion of the pressure curve. The maximum tank pressure, occurring 55 msec after ignition, is seen to be 3,58 bars. The pH of the gas in the tank, as measured, was 9.

Example 2

93 grams of pellets 1.52 mm thick and 6.35 mm in diameter were used for the gas generant 58. The ignition system included an electric squib and 3 grams of the same composition as in Example 1 for the pyrotechnic material 48. The cooling filter comprised 185 grams of crimped wire segments with 2—80 mesh wire screen layers 42 on top and 1—12 mesh wire screen layer 40 underneath. The material used for the neutralizer 94 comprised 12 grams of cadmium chloride.

The results are plotted in Figure 7 wherein it is seen that the pressure in the combustion chamber increased to a maximum in excess of 186.08 bars in an interval of about 6 msec after an ignition delay of 2—3 msec, the generator action time being 45 msec. The maximum tank pressure is seen to be 2.76 bars which pressure occurred 60 msec after ignition. The pH of the gas in the tank, as measured, was 10.

The lighter weight lower cost gas inflator 120 illustrated in Figure 8 includes a circular housing having a cover member 122 of inverted cup-shaped form that is attached to a cup-shaped base member 124, internal threads 126 on the latter engaging external threads 128 on cover member 122. A mounting flange 130 is provided on base member 124.

An electric squib 132 that is contained within a tube 134 is mounted within base member 124, being supported by an adapter 136 through which electrical wires 138 for energizing the squib 132 extend from the bottom of base member 124. A perforated cylinder 140 arranged in extending relation to tube 134 contains granular pyrotechnic material 143. Cylinder 140 is provided with an end cap 141 and is surrounded by a rupturable diaphragm 142. The remaining space provided in base member 124, when cover member 122 is in proper threaded engagement therewith, is filled with a gas generating charge in pelletized form as indicated at 144.

Cover member 122, as shown, includes a plurality of peripheral orifices 146. Mounted within cover member 122 is a cylindrical member 148, a pressed wire filter pack 150, a perforated metal plate 152, and a wire screen filter 154. Pressed wire filter pack 150 is of circular convex form and is provided with an inverted, generally cup-shaped, retaining member 156 having an upper offset portion 158 which bears against the upper inner wall of cover member 122. The upper surface of retaining member 156, except for the offset portion 158, includes a plurality of perforations indicated at 160. The lower circular edge 162 of retaining member 156 is bent inwardly for providing lower peripheral edge support for the pressed wire filter pack 150. Additionally, for retaining the integrity of the filter pack 150, there is desirably provided layers of wire screen 164 and 166 on the top and bottom surfaces, respectively, of the filter. Filter pack 150 is further supported in cover member 122 of inflator 120 by an inwardly tapering upper portion 149 of cylindrical member 148, the upper peripheral edge of the filter retaining member 156 bearing against the inwardly tapering portion 149 of retaining member 148. A plurality of peripheral orifices (not shown) are provided in portion 149 of member 148, preferably angularly spaced from the orifices 146 in cover member 122.

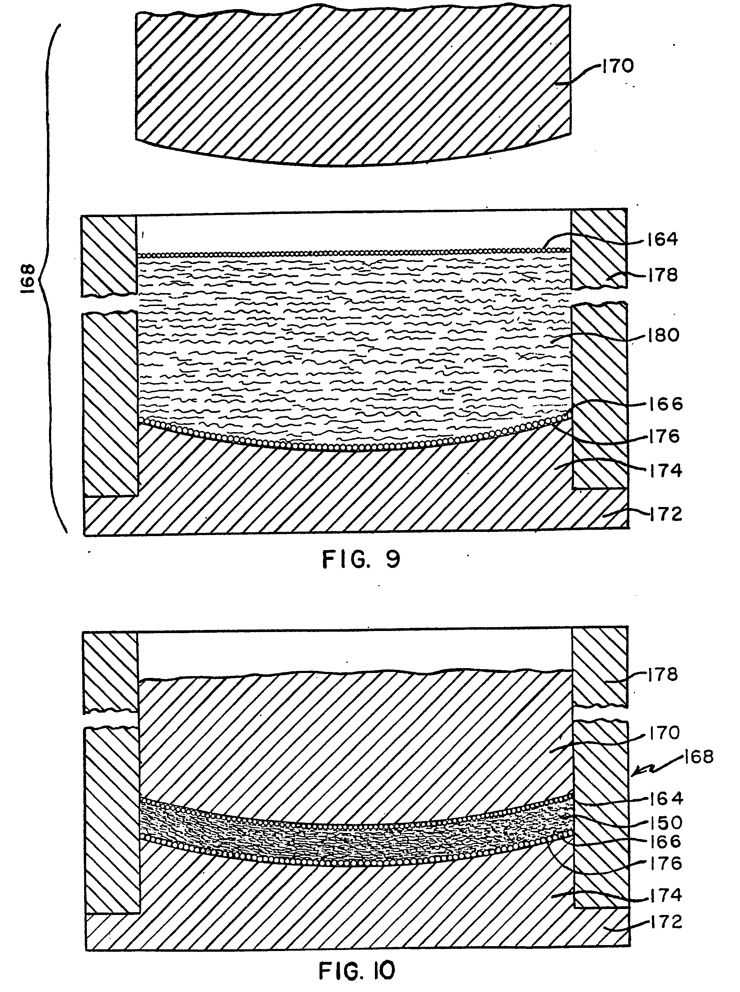

The pressed wire filter pack 150 is made of crimped wire segments that may be identical to or similar to the wire segment 20 illustrated in Figure 4. Figures 9 and 10 are semi-schematic cross sectional illustrations of typical equipment for making the filter 150. As there shown, the equipment includes a separable container or mold 168 and a cooperating ram 170, the mold 168 and ram 170 being of the proper size, shape and form to provide a packed filter 150 of desired configuration. Mold 168, as shown, is comprised of a base member 172 having an upstanding circular projection 174 the upper surface 176 of which is concave in shape matching the convex form desired for the filter pack 150, and further includes a cylindrical member 178 that is positioned on the base member 172 in snug engagement with the upstanding projection 174. The lower surface of ram 170 is of convex shape and matches the concave form desired for the filter 150, as seen in Figure 8.

Crimped wire fibers or segments indicated at 180, after being cut by a cutting machine such as the cutting machine 18 of Figure 1, are loosely positioned in random orientation in the mold 168, as indicated in Figure 9, where they are pressed by the ram 170 into a pack of the convex shape and form required of the pressed wire fiber filter 150, layers 164 and 166 being provided, as indicated to retain the segments. Ram 170 exerts a pressing force of magnitude sufficient to move the ram and the wire fibers or segments into the position shown in Figure 10. Mold 168, as indicated, is readily separable whereby easy access to the formed and packed filter 150 is provided.

It will be understood that, if desired, the retaining wire screen members 164 and 166, as seen in Figure 9, may be brought into association with the associated filter pack 150 after the pressing of the filter into the desired size, shape and form has been effected.

**Claims**

1. A gas inflator (44; 120) for an inflatable occupant restraint, comprising a housing, a gas generating charge (58; 144) in said housing, an electric squib (46; 132) for igniting said charge in response to a predetermined signal, an outlet in said housing for the expulsion of gases formed upon igniting and burning of said charge, and a cooling filter pack (30; 150) in said housing between said charge and said outlet, characterised in that said cooling filter pack (30; 150) is made of numerous randomly oriented pressed crimped wire segments (20).

2. A gas inflator as claimed in claim 1, characterised in that the crimped wire segments (20) are crimped in more than one plane.

3. A gas inflator as claimed in claim 1 or 2, characterized in that the material from which the crimped wire segments (20) are made is bright carbon steel.

4. A gas inflator as claimed in claim 1, 2 or 3, characterised in that the width of each of the crimped wire segments (20) is in a range of three to one hundred wire diameters, and the length of each of the segments is in a range from 0.3 centimetres to 2.5 centimetres.

5. A gas inflator as claimed in claim 1, 2, 3 or 4, characterised in that it includes layers of woven screen (40, 42 or 164, 166) on opposite sides of the cooling filter pack (30; 150).

6. A gas inflator as claimed in any preceding claim, characterised in that the housing includes an inner housing (74, 78) containing the charge (58) and electric squib (46) and having peripheral orifices (76) for the expulsion of gases, and an outer housing (80, 86) which surrounds the inner housing and defines an annular chamber (92) therewith, the outlet from the housing comprising peripheral orifices (90) in said outer housing, and in that said filter pack (30) is annular in shape and is positioned in said annular chamber between the orifices (76, 90) of said inner and outer housings.

7. A gas inflator as claimed in any of the preceding claims 1 to 5, characterised in that it includes a circular perforated plate (152) in the housing (122, 124) said plate being positioned to separate the cooling filter pack (150) from the charge (144) and the electric squib (132).

8. A gas inflator as claimed in claim 7, characterised in that the cooling filter pack (150) is generally cylindrical with one of its opposite surfaces being convex and the other opposite surface concave, the peripheral edge adjacent the concave surface of said cooling filter pack being in engagement with said plate (152) adjacent the peripheral edge of said plate, and in that the outlet in said housing comprises orifices (146) in the peripheral wall of said housing adjacent the convex surface of said cooling filter pack.

9. A gas inflator as claimed in claim 8, characterised in that it includes a perforated retaining member (156) covering at least the convex surface of the filter pack (150), said retaining member including an offset portion (158) projecting from the central convex surface portion of the filter pack, said offset portion of the retaining member cooperating with an inner surface of the housing (122) to provide support for said filter pack.

10. A method of making a cooling filter pack (30; 150) for a gas inflator (44; 120) as claimed in any of the preceding claims 1 to 9, characterised by the steps of crimping smooth wire (14) into a squiggley pattern, cutting the crimped wire into a plurality of segments (20), loosely placing the randomly oriented crimped wire segments in a mold (24; 168) having the shape and formed desired for the cooling filter pack, and pressing said wire segments together in the mold.

11. A method as claimed in claim 10, characterised in that the smooth wire (14) is crimped in more than one plane to ensure random distribution, orientation, and interlocking of the segments (20) when pressed in the mold (24; 168) thereby to provide uniformity in packing and to provide multiple intricate gas paths through the filter (30; 150).

12. A method as claimed in claim 10 or 11, characterised in that it includes the steps of placing layers of woven screen (40, 42 or 164, 166) over the pressed cooling filter pack (30, 150) on both the effluent inlet and exit sides.

**Patentansprüche**

1. Gasaufblasgerät (44; 120) für eine aufblasbare Insassen-Rückhaltevorrichtung, bestehend aus einem Gehäuse, einer gaserzeugenden Ladung (58; 144) in dem Gehäuse, einem elektrischem Zünder (46; 132) zum Zünden der erwähnten Ladung in Abhängigkeit von einem vorbestimmten Signal, einem Auslaß in dem Gehäuse zum Ausstoßen der durch Zünden und Abbrennen der Ladung erzeugten Gase und aus einer Kühlfilterpackung (30; 150) in dem Gehäuse zwischen der Ladung und dem Auslaß, dadurch gekennzeichnet, daß die Kühlfilterpackung (30, 150) aus zahlreichen, beliebig ausgerichteten, gepreßten, gekräuselten Drahtabschnitten (20) hergestellt ist.

2. Gasufblasgerät nach Anspruch 1, dadurch gekennzeichnet, daß die gekräuselten Drahtabschnitte (20) in mehr als einer Ebene gekräuselt sind.

3. Gasaufblasgerät nach Anspruch 1 oder 2, dadurch gekennzeichnet, daß das Material, aus dem die gekräuselten Drahtabschnitte (20) hergestellt sind, aus blankem Kohlenstoffstahl besteht.

4. Gasaufblasgerät nach Anspruch 1, 2 oder 3, dadurch gekennzeichnet, daß die Breite jedes der gekräuselten Drahtabschnitte (20) im Bereich des derifachen bies einhundertfachen beträgt und daß lie Länge jedes der Abschnitte im Bereich von 0, 3 bis 2, 5 cm liegt.

5. Gasaufblasgerät nach Anspruch 1, 2, 3 oder 4, dadurch gekennzeichnet, daß es Schichten aus gewebten Abschirmungen (40, 42 oder 164, 166) auf gegenüberliegenden Seiten der Kühlfilterpackung (30; 150) einschließt.

6. Gasaufblasgerät nach einem der vorangehenden Ansprüche, dadurch gekennzeichnet, daß das Gehäuse ein Innengehäuse (74, 78) einschließt, das die Ladung (58) und den elektrischen Zünder (46) enthält und Umfangsöffnungen (76) zum Ausstoßen der Gase aufweist, und daß es ein Außengehäuse (80, 86) einschließt, das das Innengehäuse umgibt und mit diesem eine Ringkammer (92) bildet, daß das Gehäuse Umfangsöffnungen (90) in dem Außengehäuse aufweist und daß die Filterpackung (30) Ringform aufweist und in der Ringkammer zwischen den Öffnungen (76, 90) des Innen- und des Aubengehäuses vorgesehen ist.

7. Gasaufblasgerät nach einem der vorangehenden Ansprüche 1 bis 5, dadurch gekennzeichnet, daß es eine kreisförmige, perforierte Platte (152) in dem Gehäuse (122, 124) einschließt und daß die Platte positioniert ist, um die Kühlfilterpackung (150) von der Ladung (144) und des elektrischen Zünders (132) zu trennen.

8. Gasaufblasgerät nach Anspruch 7, dadurch gekennzeichnet, daß die Kühlfilterpackung (150) in allgemeinen zylindrisch ist, wobei eine ihrer gegenüberliegenden Flächen konvex und die andere gegenüberliegende Fläche konkav ausgebildet ist, daß die der konkaven Fläche benachbarte Umfangskante der Kühlfilterpackung mit der Umfangskante der Platte (152) in Eingriff ist und daß der Auslaß des Gehäuses Öffnungen (146) in der Umfangswand des Gehäuses umfaßt, die zu der konvexon Fläche der Kühlfilterpackung benachbart sind.

9. Gasaufblasgerät nach Anspruch 8, dadurch gekennzeichnet, daß es einen perforierten Halteteil (156) einschließt, der wenigstens die konvexe Fläche der Filterpackung (150) abdeckt, daß der Halteteil einen versetzten Bereich (158) einschließt, der vom zentralen Bereich der konvexen Fläche der Filterpackung vorspringt, und daß der versetzte Bereich des Halteteiles mit einer Innenfläche des Gehäuses (11) zusammenarbeitet, um eine Abstützung für die Filterpackung vorzusehen.

10. Verfahren zum Herstellen einer Kühlfilterpackung (30; 150) für ein Gasaufblasgerät (44; 120) nach einem der vorangehenden Ansprüche 1 bis 9, gekennzeichnet durch die Schritte des Kräuselns von geradem Draht (14) in ein geschlungenes Muster, des Schneidens des gekräuselten Drahtes in eine Vielzahl von Abschnitten (20, des losen Einbringens der beliebig ausgerichteten, gekräuselten Drahtabschnitte in eine Form (24; 168) mit einer für die Kühlfilterpackung gewünschten Gestaltung und Form und des Zusammenpressens der Drahtabschnitte in der Form.

11. Verfahren nach Anspruch 10, dadurch gekennzeichnet, daß der gerade Draht (14) in mehr als in eine Ebene gekräuselt wird, um eine beliebige Verteilung, Ausrichtung und Ineinandergreifen der Abschnitte (20) zu sichern, wenn sie in der Form (24, 168) gepreßt werden, um dadurch geine Gleichmäßigkeit im Packungsaufbau und um zahlreiche, verschlungene Gaswege durch das Filter (30; 150) vorzusehen.

12. Verfahren nach Anspruch 10 oder 11, dadurch gekennzeichnet, daß es das Anbringen von Schichten aus gewebten Abschirmungen (40, 42 oder 164, 166) an der gepreßten Kühlfilterpackung (30, 150) sowohl auf der Ausströmgas-Eintrittsseite als auch auf der Ausströmgas-Austrittsseite einschließt.

## Revendications

1. Dispositif de gonflage par un gaz (44; 120) destiné à und dispositif de gonflage de retenue d'un occupant, comprenant un boîtier, une charge (58; 144) génératrice d'un gaz, placée dans le boîtier, un allumeur électrique (46; 132) destiné à allumer la charge à la suite d'un signal prédéterminé, une sortie formée dans le boîtier pour l'expulsion des gaz formés après allumage et combustion de la charge, et un bloc (30; 150) formant filtre de refroidissement, placé dans le boîtier entre la charge et la sortie, caractérisé en ce que le bloc (30; 150) formant filtre de refroidissement est constitué de nombreux segments (22) de fil métallique gaufré, comprimés et orientés aléatoirement.

2. Dispositif de gonglage par un gaz selon la revendication 1, caractérisé en ce que les segments (20) de fil métallique gaufré sont gaufrés dans plus d'un plan.

3. Dispositif de gonflage par un gaz selon l'une des revendications 1 et 2, caractérisé en ce que la matière dont sont formés les segments (20) de fil métallique gaufré est de l'acier brillant au carbone.

4. Dispositif de gonflage par un gaz selon l'une quelconque des revendications 1 à 3, caractérisé en ce que la largeur de chacun des segments (20) de fil gaufré est comprise entre 3 et 100 diamètres du fil, et la longueur de chacun des segments est comprise entre 0,3 et 2,5 cm.

5. Dispositif de gonflage par un gaz selon l'une quelconque des revendications 1 à 4, caractérisé en ce qu'il comprend des couches d'une grille tissée (40, 42 ou 164, 166) placées de part et d'autre du bloc (30, 150) formant filtre de refroidissement.

6. Dispositif de gonflage par un gaz selon l'une quelconque des revendications précédentes, caractérisé en ce que le boîtier comporte un boîtier interne (74, 78) contenant la charge (58) et un allumeur électrique (46) et ayant des orifices périphériques (76) pour l'expulsion des gaz, et un boîtier externe (80, 86) qui entoure le boîtier interne et délimite une chambre annulaire (92) avec elle, la sortie du boîtier comprenant des orifices périphériques (90) formés dans le boîtier externe, et en ce que le bloc (30) formant filtre a une forme annulaire et est disposé dans la chambre annulaire entre les orifices (76, 90) des boîtiers interne et externe.

7. Dispositif de gonflage par un gaz selon l'une quelconque des revendications 1 à 5, caractérisé en ce qu'il comprend une plaque circulaire perforée (152) placée dans le boîtier (122, 124), la plaque étant disposée afin qu'elle sépare le bloc (150) formant filtre de refroidissement de la charge (144) et de l'allumeur électrique (132).

8. Dispositif de gonflage par un gaz selon la revendication 7, caractérisé en ce que le block (150) formant filtre de refroisissement a une forme générale cylindrique dont l'une des faces opposées est convexe et l'autre concave, le bord périphérique adjacent à la face concave du bloc formant filtre de refroidissement étant en coopération avec la plaque (152) prés du bord périphérique de cette plaque, et en ce que la sortie du boîtier comporte des orifices (146) formés dans la paroi périphérique du boîtier près de la surface convexe du block formant filtre de refroidissement.

9. Dispositif de gonflage par un gaz selon la revendication 8, caractérisé en ce qu'il comprend un organe perforé de retenue (156) recouvrant au moins la surface convex du bloc (150) formant filtre, cet organe de retenue comprenant une partie décalée (158) dépassant de la partie centrale de surface convexe du bloc formant filtre, la partie décalée de l'organe de retenue coopérant avec une face interne du boîtier (122) afin qu'elle forme un support du bloc formant filtre.

10. Procédé de réalisation d'un bloc (30; 150) formant filtre de refroidissement destiné à une dispositif de gonflage par un gaz (44; 120) selon l'une quelconque des revendications 1 à 9, caractérisé par des étapes de gaufrage d'un fil métallique lisse (14) sous forme d'un dessin sineux, de découpe du fil gaufré en plusieurs segments (20), de disposition avec du jeu des segments de fil métalliques gaufré et d'orientation aléatoire dans un moule (24; 168) ayant la configuration et la forme voulues pour le block formant filtre de refroidissement, et de compression des segments de fil métallique ensemble dans le moule.

11. Procédé selon la revendication 10, caractérisé en ce que le fil métallique lisse (14) est gaufré dans plus d'un plan afin que la répartition, l'orientation et l'imbriquement des segments (20) soient aléatoires lorsqu'ils sont comprimés dans le moule (24; 168), donnant ainsi une bonne uniformité de tassement et formant de nombreux trajets enchevêtrés pour la circulation du gaz à travers le filtre (30; 150).

12. Procédé selon l'une des revendications 10 et 11, caractérisé en ce qu'il comprend des étapes de disposition de couches d'une grille tissée (40, 42 ou 164, 166) sur le bloc comprimé (30, 150) formant filtre de refroidissement à la fois de côté d'entrée et du côté de sortie.

0 012 627

FIG. 1

FIG. 2

FIG. 3

1

FIG. 4

FIG. 5

FIG. 6

FIG. 7

FIG. 8

FIG. 9

FIG. 10